# FASCICULE DE BREVET EUROPEEN

(11) **EP 1 694 172 B1**
(45) Date de publication et mention de la délivrance du brevet: **10.02.2010**
(21) Numéro de dépôt: 04816435.4
(22) Date de dépôt: 17.12.2004
(51) Int. Cl.: A47F 5/12, A47F 7/00, A47F 7/28

(54) **DISPOSITIF DE PRESENTATION D'OBJETS**
VORRICHTUNG ZUR DARBIETUNG VON GEGENSTÄNDEN
DEVICE FOR DISPLAYING OBJECTS

(30) Priorité: 19.12.2003 FR 0315099
(43) Date de publication de la demande: 30.08.2006
(73) Titulaire: PARFUMS CHRISTIAN DIOR, 75008 Paris (FR)
(72) Inventeur: STIEVENARD, Eric, F-28260 Anet (FR); HALLOPEAU, François-Agathange, F-92170 Vanves (FR)
(74) Mandataire: Burbaud, Eric
(86) Numéro de dépôt international: PCT/FR2004/003302
(87) Numéro de publication internationale: WO 2005/060796

(56) Documents cités:
- FR-A- 2 809 943
- US-A- 1 769 316
- US-A- 4 122 954

## Description

La présente invention est relative aux dispositifs de présentation d'objets.

Plus particulièrement, l'invention concerne un dispositif de présentation d'objets, comprenant :
- un pied,
- un présentoir présentant un plan moyen et comportant une face supérieure adaptée pour porter des objets à présenter, et une face inférieure,
   ledit dispositif comprenant des moyens de liaison adaptés pour articuler le présentoir sur le pied de façon à ce que ledit présentoir puisse prendre au moins une position inclinée par rapport à l'horizontale,
   le présentoir étant en outre adapté pour pivoter par rapport au pied autour d'un axe de rotation normal audit plan moyen, entre au moins des première et deuxième positions angulaires, et
- un mécanisme de blocage adapté pour bloquer ledit présentoir au moins dans lesdites première et deuxième positions angulaires.

Le document FR 2 809 943 décrit un exemple d'un tel dispositif. Néanmoins, dans ce dispositif, l'articulation du présentoir se fait à l'aide d'éléments rapportés à l'arrière de la surface du présentoir, ce qui induit d'importantes sollicitations en contraintes dans ces éléments, en particulier quand des masses importantes sont placées à la surface du présentoir, à proximité de ses bords.

La présente invention a notamment pour but de pallier à cet inconvénient.

A cet effet, selon l'invention, un dispositif du genre en question est **caractérisé en ce que** les moyens de liaison sont au moins partiellement disposés entre lesdites faces supérieure et inférieure du présentoir.

Grâce à ces dispositions, le moment de force causé au niveau de la liaison par tout type d'objet à la surface du présentoir est réduit. Le présentoir est ainsi plus robuste et plus stable.

Plus particulièrement, l'invention se rapporte à un dispositif de présentation d'objets selon le préambule de la revendication 1. Un tel dispositif est connu de US 1,769,316. Toutefois, ce dispositif du présentoir.

L'invention propose donc un dispositif de présentation d'objet qui, outre les caractéristiques mentionnées a-dessus, présente les caractéristiques mentionées dans la partie caractérisante de la revendication 1.

Les caractéristiques permettent un réglage indépendent de l'inclinaison et de l'orientation de présentoir.

Dans divers modes de réalisation de l'invention, on peut éventuellement avoir recours en outre à l'une et/ou à l'autre des dispositions des revendications dépendantes

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de face en perspective d'un dispositif selon l'invention,
- la figure 2 est une vue schématique en perspective d'un module de support d'objets,
- la figure 3a est une vue en coupe du module de la figure 2,
- la figure 3b est une vue en coupe correspondante de la tablette,
- la figure 4 est une vue en perspective de la partie supérieure du pied,
- la figure 5 est une vue en perspective partiellement éclatée d'un plateau monté sur le pied,
- la figure 6 est une vue en perspective de la tablette montée sur le plateau, et
- la figure 7 est une vue de face en perspective du dispositif de la figure 1 selon une autre orientation.

Sur les différentes figures, les mêmes références désignent des éléments identiques ou similaires.

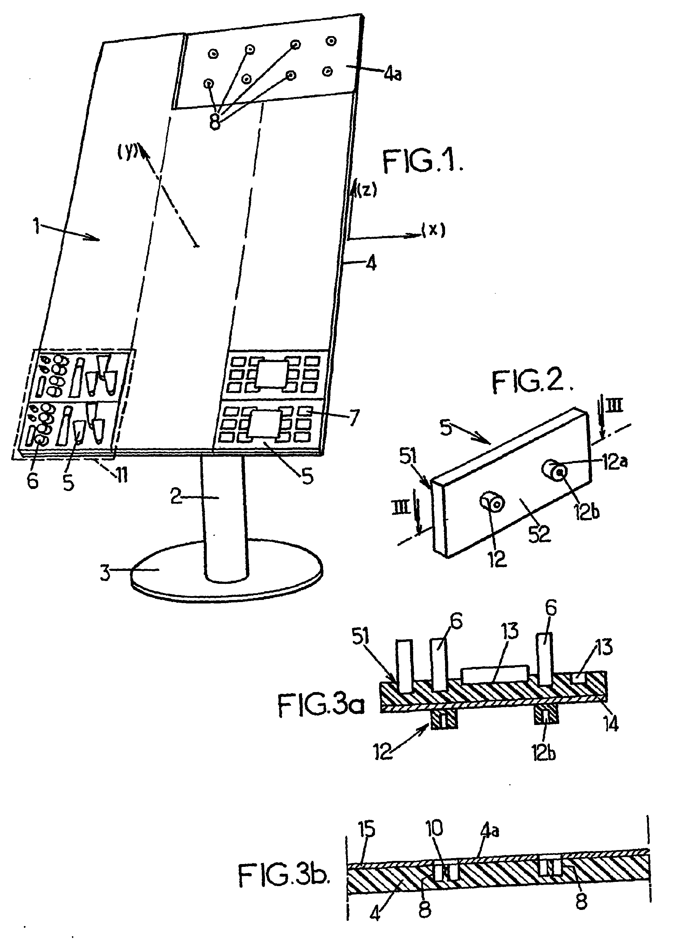

La figure 1 représente en perspective un dispositif selon l'invention. Ce dernier comporte un présentoir 1 reposant sur un pied 2, lui-même éventuellement disposé sur un socle 3 posé sur le sol. Le présentoir 1 est représenté sur la figure 1 comme incliné vers l'avant d'un angle environ égal à 60° par rapport à l'horizontale. Comme on le verra par la suite, le dispositif comporte un mécanisme approprié pour permettre de disposer le présentoir selon toute inclinaison voulue par rapport à l'horizontale dans une plage d'inclinaison qui peut comporter en particulier une position dans laquelle le présentoir est disposé à l'horizontale.

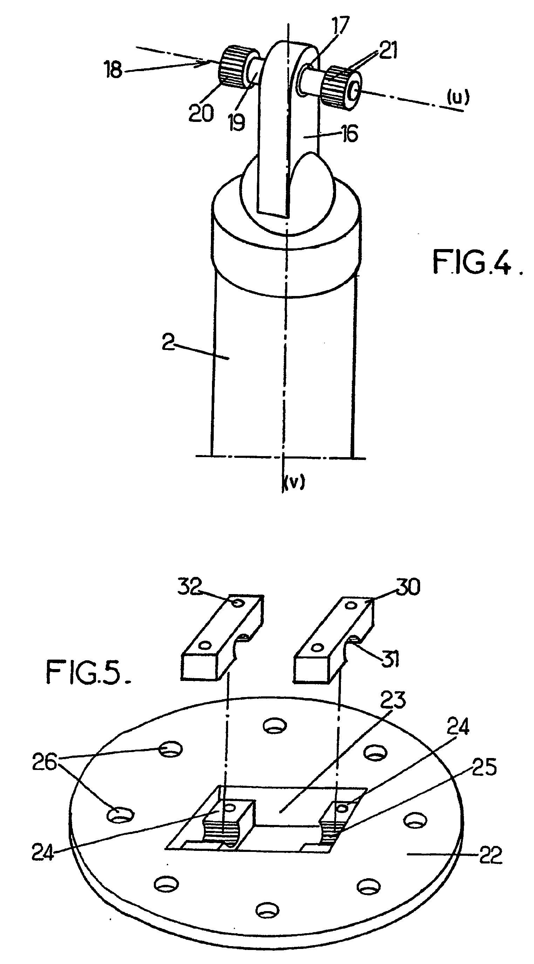

Le présentoir de l'exemple présente une forme parallélépipédique d'épaisseur faible par rapport à ses largeur W et longueur H. Il présente donc un plan géométrique moyen (x ; z) sensiblement parallèle à ses faces supérieure et inférieure étendues. L'invention pourrait cependant s'appliquer à des présentoirs dont des faces supérieure ou inférieure présentent d'autres formes, par exemple ondulées ou bombées. Le présentoir ici décrit comporte en particulier un plateau 22 (figure 5) et une tablette de soutien 4 rigide de forme parallélépipédique, montée sur le plateau 22, et sur laquelle sont montés de manière amovible des modules 5 de support d'objets. Ces modules de support d'objets sont fixés sur la face supérieure 4a de la tablette de soutien 4 de manière à la recouvrir partiellement ou entièrement, et présentent également une forme parallélépipédique à face rectangulaire ou carrée, de longueur a, de largeur b. Dans l'exemple représenté, les modules présentent une forme rectangulaire de longueur a égale au double de la largeur b. Deux modules placés côte à côte avec leurs longueurs contiguës constituent alors un espace de rangement 11 carré (encadré en pointillés sur la figure 1). Sur ces modules 5 sont fixés de manière amovible ou permanente des objets 6, 7 à présenter. Sur la figure 1, seuls les deux modules situés en bas à gauche et les deux modules situés en bas à droite de la figure portent des objets 6, 7, comme par exemple des crayons 6, des échantillons de poudre 7, des tubes de rouge à lèvres, des flacons ou autres. Certains modules peuvent également porter des écriteaux, une glace, ou autres. En outre, un certain nombre de modules ont été retirés dans le coin supérieur droit du présentoir 1 pour permettre de visualiser la tablette 4, même si, en utilisation normale, la tablette est souvent entièrement recouverte de tels modules.

Ainsi, la tablette 4 peut présenter un ensemble ordonné périodique de reliefs de fixations 8 disposés par exemple à raison de deux par module. Ces reliefs de fixation sont par exemple sous la forme d'un cylindre creux réalisé dans la tablette 4 et pourvu en son centre d'un guide de fixation 10 sous la forme d'une pointe fixée sur le fond du cylindre et orientée par exemple en direction de la face supérieure 4a de la tablette 4. Selon les modes de réalisation, les reliefs de fixation ne disposent pas nécessairement de guide de fixation 10, et ne sont pas nécessairement cylindriques.

Les reliefs de fixation sont disposés de manière régulière et ordonnée sur la tablette 4. Par exemple, si un même module est maintenu à l'aide d'un premier et d'un deuxième reliefs de fixation alignés selon la longueur du module, on peut en particulier prévoir que, au sein d'un même espace de rangement contenant deux tels modules dont les longueurs sont contiguës, la distance séparant longitudinalement les deux reliefs de fixation d'un même module soit égale à la distance séparant les premiers reliefs de fixation de chacun des modules. Un module de support peut ainsi être fixé selon deux positions par rapport au présentoir : en étant aligné soit avec la longueur du présentoir, soit avec sa largeur.

La figure 2 représente en perspective depuis l'arrière un module de support selon l'invention. Sa face avant 51 est destinée à recevoir des articles à présenter. Sa face arrière 52 comporte deux reliefs de fixation 12 de forme complémentaire des reliefs de fixation réalisés dans la tablette 4. Dans le cas particulier présenté ici, les reliefs de fixation 12 se présentent donc sous la forme de deux cylindres 12a disposés par exemple sur la ligne centrale du module et présentant en leur centre un évidement 12b adapté pour recevoir le guide de fixation 10.

La figure 3a représente un tel module pris selon une coupe le long de la ligne centrale de la figure 2. La face avant 51 est munie d'alvéoles 13 adaptées pour recevoir des crayons 6 ou autres objets à présenter, allongés ou debout (sur la droite de la figure 3a, une alvéole 13 est représentée libre). Les objets à présenter sont par exemple emboîtés par un utilisateur dans l'alvéole 13 de façon à être maintenus rigidement par rapport au module de support d'objet.

La face de fixation 52 du module 5 de support d'objets présente deux reliefs de fixation 12 comme décrit précédemment. La fixation peut être simultanément ou alternativement assurée par la coopération d'éléments magnétiques disposés comme représenté sur les figures 3a et 3b qui représente une partie de la plaquette 4 en regard du module 8 représenté sur la figure 3a. Une première couche aimantée 14 est disposée à proximité de la face inférieure du module 5. Simultanément, la face supérieure de la tablette 4 comporte une deuxième couche aimantée 15 d'aimantation complémentaire à la première couche, ou munie d'éléments ferromagnétiques.

La figure 4 représente la partie supérieure du pied 2, qui est masquée par le présentoir sur la figure 1. Le pied 2 s'étend, par exemple, verticalement le long de l'axe (v). Sa partie supérieure porte un bras 16 s'étendant, par exemple, verticalement vers le haut depuis le pied 2 et présentant une ouverture 17 par exemple de forme ovoïde s'étendant horizontalement à travers l'épaisseur du bras autour d'un axe (u) horizontal. Dans l'ouverture 17 est monté fixement un arbre 18 de manière symétrique par rapport au bras. Cet arbre 18 comporte une portion centrale de forme complémentaire de l'ouverture 17, depuis laquelle s'étend de chaque côté une tige comportant une première partie 19 cylindrique de surface lisse puis une deuxième partie 20 cylindrique de diamètre supérieur et portant des dents 21 sur tout ou partie de sa périphérie.

Le présentoir est monté sur le pied par l'intermédiaire d'un plateau 22 représenté en perspective sur la figure 5. La face arrière du plateau présentée sur la figure 5 est tournée vers le pied 2. La face arrière du plateau 22 est de forme circulaire et comporte un évidement central 23 dans lequel sont fixées les parties internes 24 de deux paliers présentant des dents 25 complémentaires des dents 21 de l'arbre 18. Sur sa périphérie, le plateau 22 comporte également un certain nombre d'évidements 26 traversants, par exemple de forme cylindrique, et ménagés à intervalles angulaires réguliers de la périphérie du plateau. La face avant (non visible sur la figure 5) du plateau est par exemple plane et lisse.

Une fois que le plateau 22 est positionné sur le pied 2 avec l'inclinaison voulue, les dents 21 de l'arbre 18 coopérant avec les dents complémentaires 25 des parties internes 24 des deux paliers, des parties externes 30 des deux paliers, possédant également des dents 31 adaptées, sont fixées sur les parties internes 24 de manière à entourer au moins partiellement l'axe 18. La fixation peut, par exemple, se faire par vissage de vis (non représentées) dans des alésages filetés 32 des paliers.

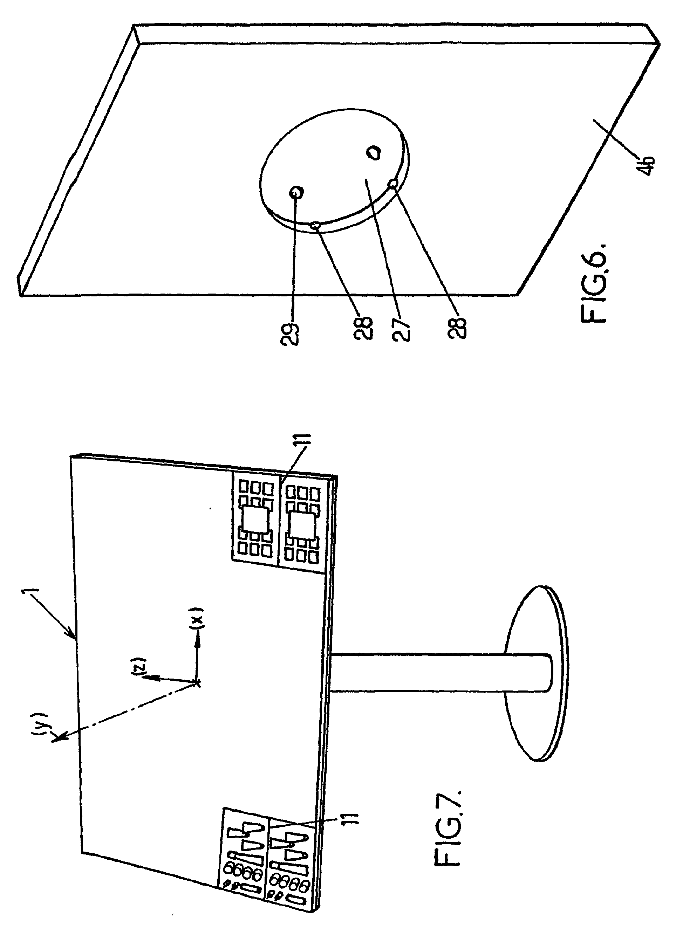

La figure 6 représente en perspective la tablette 4 vue de l'arrière. Celle-ci comporte une zone centrale 27 évidée de forme complémentaire du plateau 22, sur lequel elle peut ainsi être montée. Un système de roulement à billes 28 est monté à la périphérie de la zone centrale, pour permettre une rotation de la tablette par rapport au plateau 22. Dans le fond de l'évidement sont disposées des billes 29 à intervalles angulaires réguliers. On dispose par exemple de deux billes disposées de manière diamétralement opposée. Un ressort maintient chaque bille en une position déployée dans laquelle elle fait saillie par rapport à la zone centrale 27. Chaque bille peut néanmoins être rentrée totalement à l'intérieur de la tablette contre la poussée du ressort, dans une position rétractée.

Les billes 29 sont adaptées pour entrer dans les évidements 26 du plateau quand celui-ci est monté dans la zone centrale 27 et pour empêcher ainsi la rotation de la tablette 4 par rapport au plateau 22. Quand les billes sont amenées en position rétractée, la tablette est libre de tourner par rapport au plateau 22 jusqu'à ce que les billes 29 entrent dans d'autres évidements 26 correspondant à une autre orientation de la tablette. On peut, par exemple, faire tourner la tablette de θ=90° par rapport au plateau qui est monté fixe par rapport au pied, entre une première position angulaire représentée sur la figure 1 et une deuxième position angulaire représentée sur la figure 7.

Pour une même inclinaison, la tablette est adaptée pour pouvoir tourner autour d'un axe de rotation (y) normal au plan moyen (x ; z) du présentoir, et pour pouvoir être bloquée dans un certain nombre de positions comme celles représentées sur les figures 1 et 7. Par rapport à la figure 1, la tablette de la figure 7 a tourné de 90° par rapport à l'axe de rotation (y). En outre, les modules ont été réagencés sur la surface de présentation. Ainsi, les modules 5 de l'espace de rangement 11 des crayons 6, ont été tournés de 90° par rapport à l'axe (y) dans le sens opposé au sens de rotation de la tablette 4, et disposés dans le coin inférieur gauche du présentoir 1 selon la nouvelle orientation. De même, les modules 5 de l'espace de rangement 11 des poudres 7 ont subi la même rotation et ont été disposés dans le coin inférieur droit du présentoir.

Chaque espace de rangement peut ainsi être disposé de manière identique par rapport à un observateur extérieur, en faisant tourner par rapport à l'axe de rotation le module par rapport au présentoir d'un angle égal à l'angle de rotation de la tablette par rapport au pied, dans le sens opposé.

Le présentoir peut en outre être incliné par rapport à la verticale selon une grande plage d'inclinaison. Pour cela, le plateau 22 doit être monté selon l'inclinaison souhaitée sur l'arbre 18, les dents 25, 31 des paliers coopérant avec les dents 21 de l'arbre 18. Le secteur angulaire denté de l'arbre 18 et des paliers définit la plage d'inclinaisons disponible.

## Revendications

1. Dispositif de présentation d'objets, comprenant :
- un pied (2),
- un présentoir (1) présentant un plan moyen (x ; z) et comportant une face supérieure (4a) adaptée pour porter des objets (6, 7) a présenter, et une face inférieure (4b), le présentoir comprenant un plateau (22) et une tablette (4),
ledit dispositif comprenant des moyens de liaison adaptés pour articuler le plateau sur le pied (2) de façon à ce que ledit présentoir puisse prendre au moins une position inclinée par rapport à l'horizontale, les moyens de liaison étant au moins partiellement disposées entre lesdites faces supérieure (4a) et inférieure (4b) du présentoir,
**caractérisé en ce que** la tablette (4) est en outre adaptée pour pivoter par rapport au plateau (22) autour d'un axe de rotation (y) normal audit plan moyen, entre au moins des première et deuxième positions angulaires, et **en ce que** le dispositif de présentation comporte en outre un mécanisme de blocage (26, 29) adaptée pour bloquer la tablette (4) par rapport au plateau (22) au moins dans lesdites première et deuxième positions angulaires.

2. Dispositif selon la revendication 1 dans lequel les moyens de liaison comprennent un mécanisme de réglage d'inclinaison (18, 24, 30) adapté pour sélectivement bloquer ou libérer le présentoir en rotation autour d'un axe horizontal (u).

3. Dispositif selon la revendication 2, dans lequel le pied (2) présente un axe longitudinal (v), et dans lequel ledit axe longitudinal (v), l'axe de rotation (y) et l'axe horizontal (u) sont concourants en un point d'intersection compris entre les faces supérieure (4a) et inférieure (4b) du présentoir.

4. Dispositif selon d'une quelconque des revendications precédentes, dans lequel lesdits moyens de liaison sont disposés au centre de ladite face inférieure (4b) de présentoir.

5. Dispositif selon l'une quelconque des revendications précédentes, dans lequel les première et deuxième positions angulaires forment un angle θ entre elles, et dans lequel des modules (5) de support d'objects, adaptés pour porter les objets (6, 7) à présenter, sont fixés de manière amovible sur la face supérieure du présentoir par des moyens de fixations (8, 12; 14, 15) adaptée pour permettre de fixer chaque module de support dans des première et deuxième positions par rapport au présentoir formant l'une par rapport à l'autre ledit angle.

6. Dispositif selon la revendication 5, dans lequel ladite face supérieure comporte des espaces de rangement (11) carrés, recevant chacun au moins un module (5) de support d'objets, dans lequel lesdites première et deuxième positons angulaires amont perpendiculaires entre elles et dans lequel lesdites première et deuxième positions des modules (5) de support sont perpendiculaires entre elles.

7. Dispositif selon la revendication 5 ou la revendication 6, dans lequel la face supérieure (4a) du présentoir comporte des reliefs (8) coopérant par emboîtement avec des reliefs (12) complémentaires appartenant à chaque module (5) de support d'objets.

8. Dispositif selon l'une quelconque des revendications 5 à 7, dans lequel la face supérieure (4a) du présentoir et les modules (5) de support d'objets sont fixés l'un à l'autre de manière amovible par des moyens magnétiques (14, 15).

9. Dispositif selon l'une quelconque des revendications 5 à 8, dans lequel au moins certains des modules (5) de support d'objets comportent des alvéole (13) adaptées pour recevoir par emboîtement des objets (6, 7) à présenter.

10. Dispositif selon l'une quelconque des revendications 5 à 9, dans lequel les modules (5) ont une forme parallélépipédique rectangle de longueur a et de largeur b, a étant un multiple entier de b, et dans lequel la face supérieure (4a) du présentoir a une forme rectangulaire de longueur H et de largeur W, W étant un multiple entrer de a et H étant un multiplie entier de b.

11. Dispositif selon l'une quelconque des revendications 5 à 10, dans lequel les modules ont une forme parallélepipedique rectangle de longueur a, de largeur b, et dans lequel la face supérieure (4a) du présentoir a une forme rectangulaire de longueur et de largeur toutes deux multiples entiers à la fois de a et de b.

12. Dispositif selon la revendication 10 ou la revendication 11, dans lequel lesdits modules (5) présentant une longueur a sensiblement égale au double de leur largeur b.

## Claims

1. An object display device comprising:
· a leg (2) ;
· a display panel (1) presenting a mean plane (x ; z) and having a top face (4a) adapted to carry objects (6, 7) to be displayed, and a bottom face (4b), the display panel comprising a plate (22) and a board (4);
said device further comprising coupling means adapted to hinge the plate to the leg (2) so that said display panel can take up at least one inclined position in which it is inclined relative to the horizontal, the coupling means being disposed at least in part between said top face (4a) and said bottom face (4b) of the display panel ;
**characterized in that** the board (4) is further adapted to pivot relative to the plate (22) about a pivot axis (y) that is normal to said mean plane, between at least first and second angular positions; and
**in that** the display device further comprises a locking mechanism adapted to lock the board (4) with respect to the plate (22) at least in said first and second angular positions.

2. A device according to claim 1, in which the coupling means comprise an inclination adjustment mechanism (18, 24, 30) adapted to lock or to release the display panel selectively in rotation about a horizontal axis (u).

3. A device according to claim 2, in which the leg (2) has a longitudinal axis (v), and in which said longitudinal axis (v), the pivot axis (y), and the horizontal axis (u) meet at a point of intersection lying between the top face (4a) and the bottom face (4b) of the display panel.

4. A device according to any preceding claim, in which said coupling means are disposed at the center of said bottom face (4b) of the display panel.

5. A device according to any preceding claim, in which the first and second angular positions form an angle θ between them, and in which object support modules (5) adapted to carry the objects (6, 7) to be displayed are fastened removably to the top face of the display panel by fastening means (8,12;14,15) adapted to make it possible to fasten each support module in first and second positions relative to the display panel, said first and second positions forming said angle θ relative to each other.

6. A device according to claim 5, in which said top face is provided with square storage spaces (11), each of which receives at least one object support module (5), in which said first and second angular positions are mutually perpendicular, and in which said first and second positions of the support modules (5) are mutually perpendicular.

7. A device according to claim 5 or 6, in which the top face (4a) of the display panel is provided with patterns (8) that co-operate by interfitting with complementary patterns (12) belonging to each object support module (5).

8. A device according to any of claims 5 to 7, in which the top face (4a) of the display panel and each of the object support modules (5) are fastened to each other in removable manner by magnetic means (14, 15).

9. A device according to any of claims 5 to 8, in which at least some of the object support modules (5) are provided with wells (13) adapted to receive, by interfitting, the objects (6,7) to be displayed.

10. A device according to any of claims 5 to 9, in which the modules (5) are of rectangular block shape of length a and of width b, where a is an integer multiple of b, and in which the top face (4a) of the display panel is of rectangular shape of length H and of width W, where W is an integer multiple of a and H is an integer multiple of b.

11. A device according to any of claims 5 to 10, in which the modules are of rectangular block shape of length a and of width b, and in which the top face (4a) of the display panel is of rectangular shape of length and of width that are both integer multiples both of a and of b.

12. A device according to claim 10 or 11 , in which said modules (5) are of length a substantially equal to twice their width b.

## Patentansprüche

1. Vorrichtung zur Darbietung von Gegenständen, enthaltend:
- einen Fuß(2),
- eine Präsentierhilfe (1), die eine mittlere Ebene (x; z) bietet und eine obere Oberfläche (4a), die so gestaltet ist, dass sie darzubietende Gegenstände (6, 7) tragen kann, und eine untere Oberfläche (4b) aufweist, wobei die Präsentierhilfe eine Scheibe (22) und eine Tafel (4) umfasst,
wobei die Vorrichtung Verbindungsmittel umfasst, die so gestaltet sind, dass die Scheibe auf dem Fuß dergestalt angelenkt ist, dass die Präsentierhilfe wenigstens eine gegenüber der Horizontalen geneigte Stellung einnehmen kann, wobei die Verbindungsmittel wenigstens teilweise zwischen der genannten oberen Oberfläche (4a) und der genannten unteren Oberfläche (4b) der Präsentierhilfe angeordnet sind,
**dadurch gekennzeichnet, dass** die Tafel (4) unter anderem so gestaltet ist, dass sie gegenüber der Scheibe (22) um eine gegenüber der mittleren Ebene rechtwinklig angeordneten Rotationsachse (y) schwenkbar ist, und zwar zwischen wenigstens einer ersten und einer zweiten Winkelposition, und dass die Darbietungsvorrichtung unter anderem einen Blockiermechanismus (26, 29) aufwiest, der so gestaltet ist, dass er die Tafel (4) gegenüber der Scheibe (22) wenigstens in den genannten ersten und zweiten Winkelpositionen feststellt.

2. Vorrichtung nach Anspruch 1, bei der die Verbindungsmittel einen Mechanismus zur Regelung der Neigung (18, 24, 30) umfasst, der zum wahlweisen Blockieren oder Freigeben der Rotation der Präsentierhilfe um eine Horizontalachse (u) gestaltet ist.

3. Vorrichtung nach Anspruch 2, bei der der Fuß (2) eine Längsachse (v) bietet, und bei der die Längsachse (v), die Rotationsachse (y) und die Horizontalachse (u) in einem Schnittpunkt zusammenfallen, der zwischen der oberen Oberfläche (4a) und der unteren Oberfläche (4b) der Präsentierhilfe liegt.

4. Vorrichtung nach einem oder mehreren der vorhergehenden Ansprüche, bei der die Verbindungsmittel im Zentrum der unter Oberfläche (4b) der Präsentierhilfe angeordnet sind.

5. Vorrichtung nach einem oder mehreren der vorhergehenden Ansprüche, bei der die erste Winkelposition und die zweite Winkelposition einen Winkel θ zwischen sich einschließen, und bei der Module (5) zur Objekthalterung, die zum Tragen der darzubietenden Objekte (6, 7) gestaltet sind, abnehmbar auf der oberen Oberfläche der Präsentierhilfe durch Befestigungsmittel (8, 12; 14, 15) befestigt sind, wobei die Befestigungsmittel so gestaltet sind, dass sie jedes Halterungsmodul in ersten und zweiten Positionen gegenüber der Präsentierhilfe fixieren können, die damit den genannten Winkel gegeneinander bilden.

6. Vorrichtung nach Anspruch 5, bei der die obere Oberfläche quadratische Anordnungsbereiche (11) umfasst, die jeweils wenigstens ein Modul (5) zur Objekthalterung aufnehmen, in denen die ersten und zweiten Winkelpositionen rechtwinklig zueinander stehen und in denen die ersten und zweiten Positionen der Halterungsmodule (5) rechtwinklig zueinander sind.

7. Vorrichtung nach Anspruch 5 oder Anspruch 6, bei der die obere Oberfläche (4a) der Präsentierhilfe Profile (8) umfasst, die in zu jedem Modul (5) zur Objekthalterung gehörenden Komplementärprofile (12) eingepasst werden können.

8. Vorrichtung nach einem der Ansprüche 5 bis 7, bei der die obere Oberfläche (4a) der Präsentierhilfe und der Module (5) zur Objekthalterung miteinander über Magnetmittel (14, 15) abnehmbar befestigt sind.

9. Vorrichtung nach einem der Ansprüche 5 bis 8, bei der wenigstens einzelne der Module (5) zur Objekthalterung Kammern (13) umfassen, in die darzubietende Gegenstände (6, 7) eingelegt werden können.

10. Vorrichtung nach einem der Ansprüche 5 bis 9, bei der die Module (5) parallelepiped rechtwinklig mit einer Länge a und einer Breite b sind, wobei a ein ganzes Vielfaches von b ist, und bei der die obere Oberfläche (4a) der Präsentierhilfe eine rechtwinklige Form mit einer Länge H und einer Breite W aufweist, wobei W ein ganzes Vielfaches von a ist und H ein ganze Vielfaches von b.

11. Vorrichtung nach einem der Ansprüche 5 bis 10, bei der die Module parallelepiped rechtwinklig mit einer Länge a und einer Breite b sind, und bei der die obere Oberfläche (4a) der Präsentierhilfe eine rechtwinklige Form mit einer Länge und einer Breite aufweist, die beide ein ganzes Vielfaches von a und b sind.

12. Vorrichtung nach Anspruch 10 oder 11, bei der die Module (5) eine Länge a aufweisen, die in etwa dem Doppeltem ihrer Breite b entspricht.
